# FASCICULE DE BREVET EUROPEEN

(11) **EP 1 772 759 B1**
(45) Date de publication et mention de la délivrance du brevet: **16.12.2009**
(21) Numéro de dépôt: 06120984.7
(22) Date de dépôt: 20.09.2006
(51) Int. Cl.: G02B 7/02, H01M 2/10

(54) **Barillet de lentille à focale variable**
Fassung für Zoomobjektiv
Variable focus lens barrel

(30) Priorité: 23.09.2005 FR 0552841
(43) Date de publication de la demande: 11.04.2007
(73) Titulaire: ST MICROELECTRONICS S.A., 92120 Montrouge (FR)
(72) Inventeur: Saugier, Eric, 38190, VILLARD BONNOT (FR); Diot, Jean-Luc, 38000, GRENOBLE (FR); Mee, Fabrice, 38770, Monteynard (FR)
(74) Mandataire: de Beaumont, Michel

(56) Documents cités:
- WO-A-2004/077125
- US-A- 3 745 049
- US-A- 3 945 193

## Description

### Domaine de l'invention

La présente invention concerne une monture d'objectif photographique et plus particulièrement un barillet de lentille à focale variable.

La présente invention s'applique en particulier aux objectifs d'appareils photographiques ou de caméras miniaturisés tels que ceux que l'on utilise dans les appareils photographiques associés aux téléphones portables, dans lesquels l'image se fait sur une puce semiconductrice comprenant un réseau de capteurs optiques.

### Exposé de l'art antérieur

On cherche souvent à associer à un capteur d'image un objectif à longueur focale variable pour permettre une mise au point ou un effet zoom. De façon classique, ceci est réalisé en disposant une ou plusieurs lentilles dans un barillet comprenant des pièces mobiles l'une par rapport à l'autre, généralement par suite d'une rotation d'éléments du barillet qui provoque un déplacement relatif en translation entre les lentilles constituant l'objectif.

On a développé des systèmes optiques à focale variable à commande électrique sans pièces mobiles, tels que des lentilles à électromouillage. De telles lentilles ont une focale qui varie en fonction d'une tension appliquée. On tend à développer des lentilles à focale variable qui vues de l'extérieur se présentent dans le même type de boîtier que des piles boutons. De telles lentilles à électromouillage sont disponibles par exemple auprès de la société VARIOPTIC.

Une lentille à électromouillage est décrite dans le document WO 2004/077125. Les documents US 3945193 et US 3745049 montrent des boîtiers pour piles de type bouton.

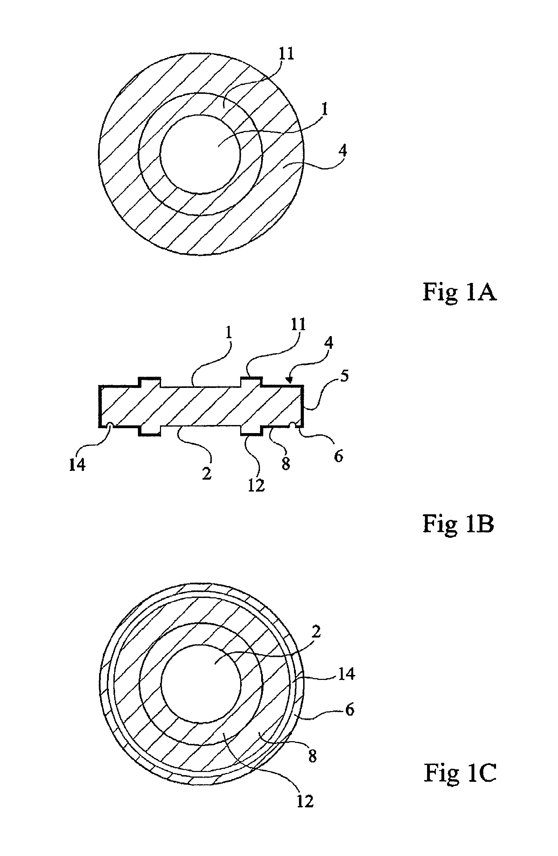

Un exemple de boîtier de lentille à focale variable de type pile bouton est illustré dans les figures 1A à 1C, dans lesquelles la figure 1A est une vue de dessus, la figure 1B représente le contour d'une section transverse et la figure 1C une vue de dessous. La partie centrale de la structure correspond à la partie optique et comporte une plaque transparente supérieure 1 et une plaque transparente inférieure 2 entre lesquelles est disposé le système optique à focale variable. La partie périphérique supérieure 4, la partie latérale 5 et la périphérie extrême inférieure 6 correspondent à une première surface métallique constituant une première électrode. La partie intermédiaire 8 entre la partie périphérique extérieure et la plaque centrale 2 du côté de la face inférieure correspond à une seconde surface métallique constituant une seconde électrode. Souvent, les parties supérieure 4 et inférieure 8 ne sont pas planes et comprennent des bossages respectifs 11 et 12. Du côté de la face inférieure, on peut voir une couronne isolante 14 séparant les deux électrodes.

L'objet de la présente invention est de prévoir une monture ou barillet de lentille permettant d'assurer le positionnement et la connexion d'une ou plusieurs lentilles de type pile bouton telles que celle illustrée en figures 1A à 1C.

Un objet plus particulier de la présente invention est de prévoir un tel barillet dans lequel les connexions à la ou aux lentilles sont effectuées sans soudure de fils ni circuits flexibles.

Un autre objet de la présente invention est de prévoir un tel barillet pouvant contenir deux lentilles à focale variable.

Un autre objet de la présente invention est de prévoir un tel barillet simplement assemblable avec d'autres barillets contenant des lentilles à focale fixe ou à focale variable commandable électriquement.

Un autre objet de la présente invention est de prévoir un tel barillet qui permette un montage simple et peu coûteux.

### Résumé de l'invention

Pour atteindre ces objets, la présente invention prévoit un barillet de lentille à focale variable à commande électrique, en boîtier de type pile bouton, comprenant un tube cylindrique creux isolant de diamètre intérieur sensiblement égal à celui du boîtier de lentille, au moins deux bossages s'étendant radialement vers l'intérieur du tube et formant des surfaces d'appui pour la périphérie de la lentille dans un même plan radial, des premières métallisations s'étendant sur au moins une desdites surfaces d'appui et depuis celles-ci dans des premiers canaux formés dans la paroi interne du tube vers au moins une extrémité du tube, et des deuxièmes métallisations dont chacune forme une zone de contact selon une portion de couronne de la surface interne du tube pour venir en appui sur la surface latérale de la lentille et s'étend vers ladite au moins une extrémité du cylindre.

Selon un mode de réalisation de la présente invention, des troisièmes métallisations sont disposées dans des deuxièmes canaux s'étendant d'une extrémité à l'autre de la paroi interne du tube.

Selon un mode de réalisation de la présente invention, les premières métallisations s'étendent vers les deux extrémités du tube.

Selon un mode de réalisation de la présente invention, les première, deuxième et troisième métallisations s'étendent jusqu'aux extrémités du tube et sur les sections du tube.

Selon un mode de réalisation de la présente invention, avant le montage d'une lentille en boîtier de type pile bouton, on dépose une goutte de colle conductrice à chaque emplacement où il doit y avoir un contact entre une métallisation et le boîtier de pile.

Selon un mode de réalisation de la présente invention, chaque premier bossage comprend une rainure entre la surface d'appui avec le boîtier de lentille et la paroi du tube pour éviter un court-circuit.

Selon un mode de réalisation de la présente invention, le barillet contient une lentille à focale variable à commande électrique et au moins une autre lentille à focale variable à commande électrique ou une lentille fixe.

La présente invention vise aussi un appareil photographique comprenant un barillet tel que ci-dessus.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A, 1B et 1C, décrites précédemment, représentent en vue de dessus, en vue de côté schématique et en vue de dessous un exemple de lentille à focale variable commandable électriquement en boîtier de type pile bouton ; et
Les figures 2A et 2B sont respectivement une vue en demi-coupe et en perspective d'un mode de réalisation d'un barillet selon la présente invention et une vue de dessus de ce même barillet.

### Description détaillée

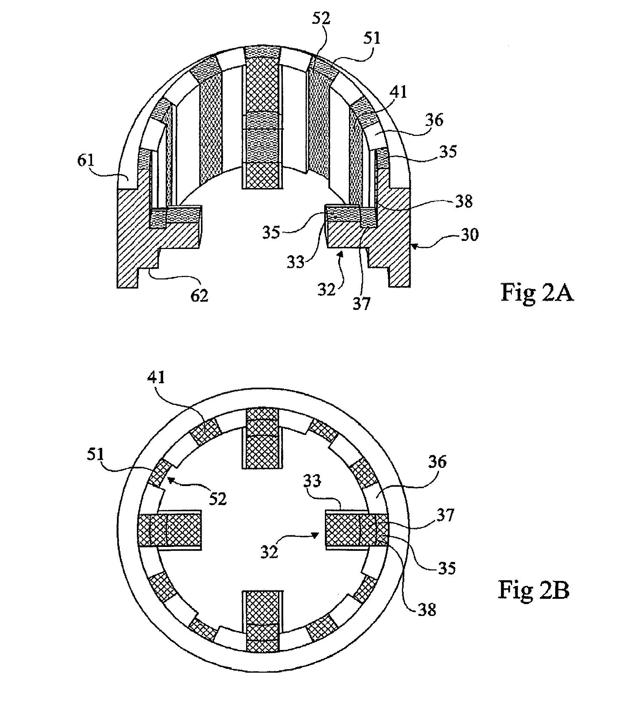

Les figures 2A et 2B sont des vues simplifiées d'un exemple de barillet ou de portion de barillet selon la présente invention. Dans la description ci-après, on mentionnera un barillet, mais on notera qu'un barillet complet pourra comprendre d'autres éléments ou que plusieurs pièces du type de celle qui est représentée en figures 2A-2B peuvent être assemblées pour constituer un barillet complet.

Un barillet selon l'invention est constitué à partir d'un tube cylindrique 30 en un matériau isolant. A l'intérieur du tube sont formés au moins deux bossages en saillie 32, quatre dans le mode de réalisation représenté, dont trois sont visibles dans la demi-coupe de la figure 2A. Ces bossages 32 s'étendent vers l'intérieur du tube à partir de la paroi interne de celui-ci. Chaque bossage comprend une plateforme 33. Les plateformes 33 sont situées dans un même plan orthogonal à l'axe du tube et sont destinées à servir d'appui à la partie 8 de la deuxième électrode d'une lentille de type pile bouton. Chaque plateforme 33 est revêtue d'une métallisation 35 représentée symboliquement par des hachures croisées. La métallisation 35 s'étend sur la plateforme 33 et remonte le long sensiblement d'une génératrice de la paroi du tube jusque vers la surface supérieure 36 du tube. De préférence, comme cela est représenté, le bossage 32 comprend du côté de sa face supérieure, au voisinage de sa jonction avec la paroi du tube, une rainure 37 pour éviter tout court-circuit entre la métallisation 35 et la partie inférieure 6 de la première électrode du boîtier de type pile bouton. En outre, la partie de la métallisation 35 remontant de la surface supérieure de la plateforme vers la partie supérieure 36 du tube est formée dans un canal 38 ménagé dans la paroi interne du tube, pour éviter tout court-circuit entre la métallisation 35 et la périphérie 5 de la première électrode de la lentille de type pile bouton. Ainsi, l'ensemble des bossages 32 et des métallisations 35 permet, d'une part, le positionnement de la lentille de type pile bouton dans le tube cylindrique 30, et d'autre part, la connexion de la seconde électrode de la lentille de type pile bouton et la remontée de cette connexion jusqu'à la surface supérieure d'un tube creux qui peut être en contact avec un autre élément destiné à assurer les connexions nécessaires. Bien entendu, cette structure est susceptible de nombreuses variantes. D'autres formes de bossage pourront être adaptées à d'autres formes de boîtier de type pile bouton. Par ailleurs, selon le type de montage envisagé, la métallisation 35 peut ou bien, comme cela a été décrit, remonter vers la face supérieure du tube creux, ou bien redescendre vers la face inférieure du tube creux, ou les deux.

Le contact avec la première électrode du boîtier de type pile bouton est pris à la périphérie du boîtier par des métallisations 41 qui s'étendent sur la paroi latérale interne du tube et qui, de préférence, remontent sur la face supérieure 36 du tube. On a représenté par souci de simplicité la métallisation 41 comme une piste de largeur uniforme. En fait, on pourra prévoir un élargissement au niveau où cette métallisation doit être en contact avec la face latérale du boîtier de type pile bouton. Dans l'exemple représenté, quatre métallisations sont prévues bien qu'en théorie une seule soit nécessaire. De même, une seule des quatre plateformes 33 nécessite une métallisation 35. Egalement, dans la représentation de la figure 2A, on a représenté la piste 41 s'étendant sur toute la hauteur de l'élément de tube 30. Bien entendu, selon les réalisations, cette métallisation peut n'aller que vers la partie haute du tube, que vers la partie basse, ou les deux.

Enfin, pour le cas où l'on prévoit un assemblage de plusieurs portions de tube telles que celle de la figure 2A pour former un barillet contenant plusieurs lentilles à focale variable à commande électrique, on pourra prévoir des pistes destinées à aller vers les autres lentilles disposées dans les autres portions de tube. Pour cela, on prévoit des pistes métalliques 51 disposées dans des canaux ou évidements 52 dont chacun s'étend sensiblement selon une génératrice du cylindre.

Ainsi, on voit qu'il est simple d'empiler plusieurs éléments de tube tels que celui de la figure 1, en prévoyant tout mode d'assemblage possible entre deux tubes, par exemple en formant un épaulement du côté de la partie supérieure et/ou un épaulement du côté de la partie inférieure du tube, chaque épaulement étant destiné à venir s'emboîter avec un épaulement complémentaire d'une portion de tube à assembler. En figure 2A, on peut voir qu'une petite partie de couronne supérieure du tube est évidée pour former un plat 61 de même qu'une petite partie de couronne inférieure du tube est évidée pour former un plat 62 et permettre un type d'assemblage classique. On pourrait également prévoir un emboîtement conique pour améliorer le centrage des lentilles d'un barillet à l'autre.

Le montage d'une lentille à boîtier de type pile bouton dans le barillet illustré en figure 2A peut se faire simplement à force. On peut aussi prévoir de bloquer les lentilles en position à l'aide de bagues isolantes. Ou bien, de préférence, avant mise en place des lentilles, on dépose une goutte de colle conductrice sur chacun des méplats 33 des bossages 32 ainsi que sur la partie de chacune des pistes 41 qui doit entrer en contact avec la périphérie de la lentille.

La présente invention est susceptible de nombreuses variantes qui apparaîtront à l'homme de l'art. Plusieurs portions de tube telles que celle illustrée en figures 2A et 2B pourront être assemblées. Les parties extrêmes supérieure ou inférieure pourront être disposées sur des pièces spécialement conçues pour une adaptation avec les autres éléments d'un système. Certaines des pièces pourront contenir des lentilles fixes, ou bien des lentilles fixes et une lentille à focale variable. En outre, on notera que, dans une pièce du type de celle des figures 2A et 2B, on peut prévoir une structure à peu près symétrique comprenant des premiers bossages comportant des premières plateformes situées dans un même plan tourné vers le haut et des seconds bossages comportant des secondes plateformes situées dans un même plan tourné vers le bas pour insérer dans un même barillet deux lentilles à focale variable de type pile bouton avec un espacement déterminé entre elles, l'une à partir du bas et l'autre à partir du haut.

La façon de former les pistes conductrices dans des tubes isolants n'a pas été décrite en détail car diverses façons de procéder sont connues de l'homme de métier. Selon un premier procédé, on réalise le tube en une matière plastique qui puisse être sensibilisée par un faisceau laser. Après cela, par trempage dans un bain, les parties sensibilisées sont métallisées. Selon un autre procédé, on procède par une double injection. On injecte d'abord dans un premier moule une matière plastique sur laquelle une métallisation n'est pas susceptible d'accrocher puis on place la pièce obtenue dans un deuxième moule dans lequel on injecte une matière plastique qui "accrochera" un métal dans un bain de revêtement non électrolytique. D'autres procédés sont envisageables.

## Revendications

1. Barillet de lentille à focale variable à commande électrique, en boîtier de type pile bouton, comprenant :
un tube cylindrique creux isolant (30) de diamètre intérieur sensiblement égal à celui du boîtier de lentille,
au moins deux bossages (32) s'étendant radialement vers l'intérieur du tube et formant des surfaces d'appui (33) pour la périphérie de la lentille dans un même plan radial, chaque bossage (32) comprenant une rainure (37) entre la surface d'appui avec le boîtier de lentille et la paroi du tube,
des premières métallisations (35) s'étendant sur au moins une desdites surfaces d'appui et depuis celles-ci dans des premiers canaux (38) formés en retrait dans la paroi interne du tube vers au moins une extrémité du tube, et
des deuxièmes métallisations (41) dont chacune forme une zone de contact selon une portion de couronne de la surface interne du tube pour venir en appui sur la surface latérale de la lentille et s'étend vers ladite au moins une extrémité du cylindre.

2. Barillet selon la revendication 1, comprenant en outre des troisièmes métallisations (51) disposées dans des deuxièmes canaux (52) s'étendant d'une extrémité à l'autre de la paroi interne du tube.

3. Barillet selon la revendication 1, dans lequel les premières métallisations (35) s'étendent vers les deux extrémités du tube.

4. Barillet selon la revendication 2, dans lequel les première (35), deuxième (41) et troisième (51) métallisations s'étendent jusqu'aux extrémités du tube et sur les sections du tube.

5. Barillet selon la revendication 1, dans lequel, avant le montage d'une lentille en boîtier de type pile bouton, on dépose une goutte de colle conductrice à chaque emplacement où il doit y avoir un contact entre une métallisation et le boîtier de pile.

6. Barillet selon la revendication 1, contenant une lentille à focale variable à commande électrique et au moins une autre lentille à focale variable à commande électrique ou une lentille fixe.

7. Appareil photographique comprenant un barillet selon l'une quelconque des revendications 1 à 6.

## Claims

1. A barrel for an electrically-controllable variable focal length lens, in a button-battery type housing, comprising:
a hollow isolating cylindrical tube (30) with an inner diameter substantially equal to that of the lens housing,
at least two bumps (32) extending radially towards the inside of the tube and forming bearing surfaces (33) for the lens periphery in a same radial plane, each bump (32) comprising a groove (37) between the bearing surface with the lens housing and the tube wall,
first metallizations (35) extending on at least one of said bearing surfaces and therefrom into first channels (38) formed offset with respect to the internal wall of the tube towards at least one end of the tube, and
second metallizations (41), each of which forms a contact area according to a crown portion of the internal surface of the tube to bear against the lateral surface of the lens and extends towards said at least one end of the cylinder.

2. The barrel of claim 1, further comprising third metallizations (51) arranged in second channels (52) extending from one end to the other of the internal tube wall.

3. The barrel of claim 1, wherein the first metallizations (35) extend towards both ends of the tube.

4. The barrel of claim 2, wherein the first (35), second (41), and third (51) metallizations extend to the ends of the tube and on the tube sections.

5. The barrel of claim 1, wherein, before assembly of a lens in a button-battery type housing, a drop of conductive glue is deposited at each location where there must be a contact between a metallization and the housing.

6. The barrel of claim 1, containing an electrically-controllable variable focal length lens and at least another electrically-controllable variable focal length lens or a fixed lens.

7. A photographic device comprising the barrel of any of claims 1 to 6.

## Patentansprüche

1. Rohrhalterung für eine elektrisch steuerbare Linse mit variabler Brennweite in einem Knopfbatteriegehäuse, welche Folgendes aufweist:
ein hohles, isolierendes zylindrisches Rohr (30) mit einem Innendurchmesser, der im Wesentlichen gleich jenem des Linsengehäuses ist,
zumindest zwei Anschläge (32), die sich radial zur Innenseite des Rohrs erstrecken und Auflageflächen (33) für den Linsenumfang in einer gleichen radialen Ebene formen, wobei jeder Anschlag (32) eine Nut (37) zwischen der Auflagefläche zum Linsengehäuse und der Rohrwand aufweist,
wobei sich erste Metallbereiche (35) auf zumindest einer der Auflageflächen erstrecken und von dort in erste Kanäle (38), die bezüglich der Innenwand des Rohrs zurückgesetzt ausgeformt sind, zu wenigstens einem Ende des Rohrs erstrecken, und
zweite Metallbereiche (41), wobei jeder davon einen Kontaktbereich gemäß einem Kronenteil der Innenfläche des Rohrs formt, um an der Seitenfläche der Linse aufzuliegen, und wobei sich jeder davon zu dem mindestens einen Ende des Zylinders erstreckt.

2. Rohrhalterung nach Anspruch 1, die weiter dritte Metallbereiche (51) aufweist, die in zweiten Kanälen (52) angeordnet sind, welche sich von einem Ende zum anderen der inneren Rohrwand erstrecken.

3. Rohrhalterung nach Anspruch 1, wobei die ersten Metallbereiche (35) sich zu beiden Enden des Rohrs hin erstrecken.

4. Rohrhalterung nach Anspruch 2, wobei die ersten Metallbereiche (35), die zweiten Metallbereiche (41) und die dritten Metallbereiche (51) sich zu den Enden des Rohrs und auf den Rohrabschnitten erstrecken.

5. Rohrhalterung nach Anspruch 1, wobei vor der Montage einer Linse in einem Knopfbatteriegehäuse ein Tropfen leitenden Klebemittels an jeder Stelle angeordnet wird, wo ein Kontakt zwischen einem Metallbereich und dem Gehäuse sein muss.

6. Rohrhalterung nach Anspruch 1, die eine elektrisch steuerbare Linse mit variabler Brennweite und mindestens eine weitere elektrisch steuerbare Linse mit variabler Brennweite oder eine feste Linse enthält.

7. Fotografische Vorrichtung, die die Rohrhalterung nach einem der Ansprüche 1 bis 6 aufweist.
